Europäisches Patentamt

European Patent Office

Office européen des brevets

(11) Veröffentlichungsnummer: **0 569 791 A2**

# (12) EUROPÄISCHE PATENTANMELDUNG

(21) Anmeldenummer: **93106984.3**

(22) Anmeldetag: **29.04.93**

(51) Int. Cl.5: **A01N 25/34**, A01N 47/22,
A01N 53/00, //(A01N25/34,
47:22,53:00),(A01N47/22,25:34,
53:00),(A01N53/00,25:34,47:22)

(30) Priorität: **12.05.92 DE 4215590**

(43) Veröffentlichungstag der Anmeldung:
**18.11.93 Patentblatt 93/46**

(84) Benannte Vertragsstaaten:
**AT BE CH DE DK ES FR GB GR IT LI NL SE**

(71) Anmelder: **BAYER AG**

**D-51368 Leverkusen(DE)**

(72) Erfinder: **Stendel, Wilhelm, Dr.**
**In den Birken 55**
**W-5600 Wuppertal 1(DE)**
Erfinder: **Dorn, Hubert, Dr.**
**Pahlkestrasse 71**
**W-5600 Wuppertal 1(DE)**
Erfinder: **Voege, Hebert, Dr.**
**Martin-Buber-Strasse 41**
**W-5090 Leverkusen 3(DE)**

(54) **Formkörper zur Bekämpfung von Ektoparasiten bei Tieren.**

(57) Die vorliegende Erfindung betrifft Formkörper, die die Wirkstoffe Flumethrin und Propoxur enthalten, zur Bekämpfung von Ektoparasiten.

EP 0 569 791 A2

Rank Xerox (UK) Business Services
(3.10/3.6/3.3.1)

EP 0 569 791 A2

Die vorliegende Erfindung betrifft Formkörper zur Bekämpfung von Ektoparasiten bei Tieren, enthaltend die Wirkstoffe Flumethrin und Propoxur.

2,2-Dimethyl-3-(2''-p-chlorphenyl-2''-chlorvinyl)-cyclopropan-1-carbonsäure-$\alpha$-cyano-3-phenoxy-4-fluorbenzylester (common name Flumethrin) und o-(2-Isopropoxyphenyl)-N-methylcarbamat (Propoxur) sind bekannt.

Mischungen aus Flumethrin und Propoxur die in Form von Sprays, Dips, Pour-on-Lösungen zur Bekämpfung von Ektoparasiten angewendet werden sind bekannt (DE-OS 2 932 920). Die Wirkstoffe beeinflussen sich bei Anwendungen, bei denen sie in definierten Konzentrationen gemeinsam ausgebracht werden, synergistisch.

Tierhalsbänder gegen Flöhe aus Polymeren wie z.B. PVC, die Propoxur als Wirkstoff enthalten, sind bekannt (US-P 3 852 416). Diese Halsbänder haben jedoch nur unzureichende Wirkung gegen Zecken. Außerdem läßt ihre Wirkungsdauer zu wünschen übrig.

Tierhalsbänder die Flumethrin als Wirkstoff enthalten sind zwar in der Literatur nicht detailliert beschrieben, haben aber in praktischen Untersuchungen nur unzureichende Wirkungen gegen Flöhe und Zecken gezeigt. Diese Wirkung kann auch nicht durch Erhöhung der Wirkstoffkonzentrationen im Polymer gesteigert werden, da es dadurch zu Hautunverträglichkeiten kommt.

Gegenstand der vorliegenden Erfindung sind

1. Formkörper zur Bekämpfung von Ektoparasiten bei Tieren, die als Wirkstoffe Flumethrin und Propoxur enthalten.

2. Verwendung von Flumethrin und Propoxur als Wirkstoffe in Formkörpern zur Bekämpfung von Ektoparasiten bei Tieren.

3. Verwendung von Flumethrin und Propoxur als Wirkstoffe zur Herstellung von Formkörpern zur Bekämpfung von Ektoparasiten bei Tieren.

Aus DE-OS 2 932 920 war die gegenseitige synergistische Beeinflussung von Flumethrin und Propoxur bekannt. Voraussetzung für diese synergistische Beeinflussung ist aber, daß die beiden Wirkstoffe in einem bestimmten Konzentrationsverhältnis zueinander zum Anwendungsort gelangen. Dieser kann bei der direkten Anwendung über Sprays, Dips etc. vom Anwender gesteuert werden.

Sind die Wirkstoffe jedoch in polymere Trägersysteme eingearbeitet ist eine Vorhersage über einen möglichen Synergismus nicht möglich. Aus der Freisetzung der Wirkstoffe aus Polymeren die nur einen der Wirkstoffe enthalten lassen sich keine Rückschlüsse ziehen in welchem Maß und in welchem Verhältnis zueinander Wirkstoffmischungen aus Polymeren freigesetzt werden.

Analytische Untersuchungen der Wirkstofffreisetzung von Flumethrin und Propoxur aus PVC zeigen, daß Flumethrin 10 mal langsamer freigesetzt wird als Propoxur.

Da außerdem Flumethrin zwar eine ausgezeichnete Wirkung gegen Zecken besitzt aber keine praktisch anwendbare Wirkung gegen Flöhe hat, konnte nicht erwartet werden, daß eine Mischung von Propoxur und Flumethrin in polymeren Trägern eine signifikante Verlängerung der Wirkung eines daraus gefertigten Tierhalsbandes gegen Flöhe bewirkt. Genau diese Steigerung der Wirkungsdauer gegen Flöhe konnte bei den erfindungsgemäßen Formkörpern festgestellt werden.

Formkörper gemäß vorliegender Erfindung sind u.a. Halsbänder, Anhänger für Halsbänder (Medaillons), Ohrmarken, Bänder zur Befestigung an Gliedmaßen oder Körperteilen, Klebestreifen und -folien, Abziehfolien.

Besonders hervorgehoben seien Halsbänder und Medaillons.

Die Formkörper enthalten Propoxur in Konzentrationen von 1 - 20 Gew.-%, bevorzugt von 5 - 20 Gew.-%, besonders bevorzugt um 10 Gew.-%. Flumethrin liegt in Konzentrationen von 0,001 - 10 Gew.-%, bevorzugt von 0,01 - 5 Gew.-%, besonders bevorzugt von 0,1 - 5 Gew.-% vor.

Im Fall von Halsbändern liegt die Konzentration der Wirkstoffe bevorzugt bei 1 - 15 %; im Fall von Medaillons, Anhängern und Ohrmarken bevorzugt bei 5 - 20 %, im Fall von Folien, Klebestreifen bevorzugt bei 0,1 - 5 %.

Zusätzlich können die erfindungsgemäßen Formkörper Duftstoffe, Spreitmittel, Haut- und Fellpflegestoffe enthalten.

Als Spreitmittel oder spreitende Öle kommen folgende Substanzen in Betracht:
Silikonöle verschiedener Viskosität; Fettsäureester, wie Aethylstearat, Laurinsäurehexylester, Dipropylenglykolpelargonat; Ester verzweigter Fettsäuren mittlerer Kettenlänge mit gesättigten $C_{16}$-$C_{18}$-Fettalkoholen wie Isopropylmyristat, Isopropylpalmitat; Capryl/Caprinsäureester von gesättigten Fettalkoholen der Kettenlänge $C_{12}$-$C_{18}$,Isopropylstearat, Ölsäuredecylester, Ölsäureoleylester; wachsartige Fettsäureester; Adipinsäurediisopropylester, letzterem verwandte Estergemische u.a. Triglyceride, wie Capryl/Caprinsäuretriglycerid, Triglyceridgemische mit Pflanzenfettsäuren der Kettenlänge $C_8$ - $C_{12}$oder anderen speziell ausgewählten natürlichen Fettsäuren; Glyceridgemische gesättigter oder ungesättigter eventuell auch hydroxylgruppenhal-

2

tiger Fettsäuren, Monoglyceride der $C_8$ - $C_{10}$-Fettsäuren und andere.

Desweiteren kommen in Frage Dibutylstearat, Dibutylsebacat, Paraffinöl, Ethylhexylpalmitat/Stearat, bzw. Isotridecylstearat, Isopropylmyristat-Isopropylpalmitat-Isopropylstearat-Gemisch.

Für die Herstellung der erfindungsgemäßen Formkörper kommen thermoplastische und flexible hitzehärtbare Kunststoffe sowie Elastomere und thermoplastische Elastomere in Frage. Als solche seien genannt Polyvinylharze, Polyurethane, Polyacrylate, Epoxyharze, Cellulose, Cellulosederivate, Polyamide und Polyester, die mit den obengenannten Wirkstoff ausreichend verträglich sind. Die Polymeren müssen eine ausreichende Festigkeit und Biegsamkeit haben, um beim Formen nicht zu reißen oder brüchig zu werden. Sie müssen von ausreichender Haltbarkeit sein, um gegen normale Abnutzung beständig zu sein. Außerdem müssen die Polymere eine ausreichende Wanderung des Wirkstoffs an die Oberfläche des Formkörpers zulassen.

Zu den Polyvinylharzen gehören Polyvinylhalogenide, wie Polyvinylchlorid, Polyvinylchlorid-Vinylacetat und Polyvinylfluorid; Polyacrylat- und Polymethacrylatester, wie Polymethylacrylat und Polymethylmethacrylat; und Polyvinylbenzole, wie Polystyrol und Polyvinyltoluol. Besonders hervorgehoben sei Polyvinylchlorid.

Für die Herstellung der erfindungsgemäßen Halsbänder auf der Basis Polyvinylharz sind die Weichmacher geeignet, die üblicherweise zum Weichmachen von festen Vinylharzen verwendet werden. Der zu verwendende Weichmacher hängt von dem Harz und seiner Verträglichkeit mit dem Weichmacher ab. Geeignete Weichmacher sind beispielsweise Ester von Phosphorsäure, wie Ester von Phthalsäure, wie Dimethylphthalat und Dioctylphthalat, und Ester von Adipinsäure, wie Diisobutyladipat. Es können auch andere Ester, wie die Ester von Azelainsäure, Maleinsäure, Ricinolsäure, Myristinsäure, Palmitinsäure, Ölsäure, Sebacinsäure, Stearinsäure und Trimellithsäure, sowie komplexe lineare Polyester, polymere Weichmacher und epoxydierte Sojabohnenöle verwendet werden. Die Menge des Weichmachers beträgt etwa 10 bis 50 Gew.-%, vorzugsweise etwa 20 bis 45 Gew.-% der gesamten Zusammensetzung.

In den Halsbändern können noch weitere Bestandteile, wie Stabilisierungsmittel, Schmiermittel, Füllstoffe und Färbematerialien, enthalten sein, ohne daß dadurch die grundlegenden Eigenschaften der Zusammensetzung verändert werden. Geeignete Stabilisierungsmittel sind Antioxydationsmittel und Mittel, die die Bänder vor ultravioletter Strahlung und unerwünschtem Abbau während der Bearbeitung, wie Strangpressen schützen. Einige Stabilisierungsmittel, wie epoxydierte Sojabohnenöle, dienen außerdem als sekundäre Weichmacher. Als Schmiermittel können beispielsweise Stearate, Stearinsäure und Polyethylene mit niedrigem Molekulargewicht verwendet werden. Diese Bestandteile können in einer Konzentration bis zu etwa 5 Gew.-% der gesamten Zusammensetzung verwendet werden.

Bei der Herstellung der erfindungsgemäßen Halsbänder auf Vinylbasis werden die verschiedenen Bestandteile nach bekannten Verfahren gemischt und nach bekannten Strangpreß- oder Spritzgußverfahren formgepreßt.

Die Wahl des Verarbeitungsverfahrens zur Herstellung der erfindungsgemäßen Halsbänder richtet sich technisch grundsätzlich nach den rheologischen Eigenschaften des Bandmaterials und der Form des gewünschten Bandes. Die Verarbeitungsverfahren können nach der Verarbeitungstechnologie oder nach der Art der Formgebung eingestellt werden. Bei der Verfahrenstechnologie kann man die Verfahren nach den bei ihnen durchlaufenden rheologischen Zuständen unterteilen. Danach kommen für viskose Bandmaterialien Gießen, Pressen, Spritzgießen und Auftragen und für elastoviskose Polymere Spritzgießen, Strangpressen (Extrudieren), Kalandrieren, Walzen und gegebenenfalls Kanten in Frage. Nach Art der Formgebung eingeteilt, lassen sich die erfindungsgemäßen Formkörper durch Gießen, Tauchen, Pressen, Spritzgießen, Extrudieren, Kalandrieren, Prägen, Biegen, Tiefziehen etc. herstellen.

Diese Verarbeitungsverfahren sind bekannt und bedürfen keiner näheren Erklärung. Im Prinzip gelten für andere Polymere die Erläuterungen, die oben beispielhaft für Polyvinylharze gemacht wurden.

Die als Trägermaterial dienenden Polyurethane werden in an sich bekannter Weise durch Umsetzung von Polyisocyanaten mit höhermolekularen, mindestens zwei gegenüber Isocyanaten reaktionsfähigen Gruppen aufweisenden Verbindungen sowie gegebenenfalls niedermolekularen Kettenverlängerungsmitteln und/oder monofunktionellen Kettenabbrechern hergestellt.

Als Ausgangskomponenten bei der Herstellung der Polyurethane kommen aliphatische, cycloaliphatische, araliphatische, aromatische und heterocyclische Polyisocyanate in Betracht, wie sie z.B. von W. Siefken in Liebig's Annalen der Chemie, 562, Seiten 75 bis 136, beschrieben werden. Beispielhaft seien genannt: Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Verbindungen, 1-Isocyanato-3,3,5.-trimethyl-5-isocyanatomethyl-cyclohexan (s. DE-AS 202 785 und US-PS 3 401 190), 2,4- und 2,6-Hexahydrotoluylen-diisocyanat sowie beliebige Gemische dieser Verbindungen; Hexahydro-1,3- und/oder -1,4-phenylendiisocyanat, Perhydro-2,4'-und/oder -4,4'-diphenylmethan-diisocyanat, 1,3- und 1,4-Phenylendiisocyanat, 2,4- und 2,6-Toluylendiisocyanat sowie beliebige Gemische dieser Verbindungen; Diphenylmethan-2,4'-und/oder -4,4'-diisocyanat, Naphthylen-1,5-diisocyanat, Triphenylmethan-4,4', 4''-triisocyanat, Polyphenyl-polymethylen-polyisocyanate, wie sie durch Anilin-Formaldehyd-Kondensation und anschließende Phosgenierung erhalten und z.B. in den GB-PSen 874 430 und 848 671 beschrieben werden; m- und p-Isocyanatophenol-sulfonyl-isocyanate gemäß der US-PS 3 454 606; perchlorierte Arylpolyisocyanate, wie sie z.B. in der DE-AS 1 157 601 und in der US-PS 3 277 138 beschrieben werden; Carbodiimidgruppen aufweisende Polyisocyanate, wie sie in der DE-PS 1 092 007 und in der US-PS 3 152 162 beschrieben werden; Diisocyanate, wie sie in der US-PS 3 492 330 beschrieben werden; Allophanatgruppen aufweisende Polyisocyanate, wie sie z.B. in der GB-PS 994 890, der DE-PS 761 626 und der veröffentlichten holländischen Patentanmeldung 7 102 524 beschrieben werden; Isocyanuratgruppen aufweisende Polyisocyanate, wie sie z.B. in der US-PS 3 001 973, in den DE-PSen 1 022 789, 1 222 067 und 1 027 394 sowie in den DE-OSen 1 929 034 und 2 004 048 beschrieben werden; Urethangruppen aufweisende Polyisocyanate, wie sie z.B. in der DE-PS 752 261 oder in der US-PS 3 394 164 beschrieben werden; acylierte Harnstoffgruppen aufweisende Polyisocyanate gemäß der DE-PS 1 230 778; Biuretgruppen aufweisende Polyisocyanate, wie sie z.B. in der DE-PS 1 101 394, in den US-PSen 3 124 605 und 3 201 372, sowie in der GB-PS 889 050 beschrieben werden; durch Telomerisationsreaktionen hergestellte Polyisocyanate, wie sie z.B. in der US-PS 3 654 106 beschrieben werden; Estergruppen aufweisende Polyisocyanate, wie sie z.B. in den GB-PSen 965 474 und 1 072 956, in der US-PS 3 567 763 und in der DE-PS 1 231 688 genannt werden; Umsetzungsprodukte der obengenannten Isocyanate mit Acetalen gemäß der DE-PS 1 072 385 und polymere Fettsäurereste enthaltene Polyisocyanate gemäß der US-PS 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanaten, einzusetzen. Ferner ist es möglich, beliebige Mischungen der vorgenannten Polyisocyanate zu verwenden.

Bevorzugte Polyisocyanate sind im allgemeinen die Toluylendiisocyanate und die Diphenylmethandiisocyanate.

Ausgangskomponenten für die Herstellung der Polyurethane sind ferner Verbindungen mit mindestens zwei gegenüber Isocyanaten reaktionsfähigen Wasserstoffatomen mit einem Molekulargewicht in der Regel von 400 - 10 000. Hierunter versteht man neben Aminogruppen, Thiolgruppen oder Carboxylgruppen aufweisenden Verbindungen vorzugsweise Polyhydroxylverbindungen, insbesondere zwei bis acht Hydroxylgruppen aufweisende Verbindungen, speziell solche vom Molekulargewicht 800 bis 10 000, vorzugsweise 1 000 bis 6 000, z.B. mindestens zwei, in der Regel 2 - 8, vorzugsweise aber 2 - 4, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen, Carbonsäuren. Anstelle der freien Polycarbonsäuren können auch die entsprechenden Polycarbonsäureanhydride oder entsprechenden Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein.

Als Beispiele hierfür seien genannt: Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexah-ydrophthalsäureanhydrid, Tetrachlorphthalsäureanhydrid, Endomethylentetrahydrophthalsäureanhydrid, Glu-tarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuedimethylester und Terephthalsäure-bis-glykolester.

Als mehrwertige Alkohole kommen z.B. Ethylenglykol, Propylenglykol-(1,2) und -(1,3), Butylenglykol-(1,4) und -(2,3), Hexandiol.-(1,6), Octandiol-(1,8), Neopentyglykol, Cyclohexandimethanol(1,4-Bis-hydroxy-methylcyclohexan), 2-Methyl-1,3-.propandiol, Glycerin, Trimethylolpropan, Hexantriol-(1,2,6), Butantriol-(1,2,4), Trimethyläthan, Pentaerythrit, Chinit, Mannit und Sorbit, Methylglykosit, ferner Diethylenglykol, Triethylenglykol, Tetraethylenglykol, Polyethylenglykole, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z.B. $\epsilon$-Caprolacton oder Hydroxycarbonsäuren, z.B. $\omega$-Hydroxycapron-säure, sind einsetzbar.

Als mehrwertige Alkohole kommen infrage Polyether die mindestens zwei, in der Regel zwei bis acht, vorzugsweise zwei bis drei, Hydroxylgruppen aufweisen. Diese sind an sich bekannt und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine, z.B. Ethylenglykol, Propylenglykol-(1,3) oder -(1,2), Trimethylolpropan, 4,4'-Dihydroxy diphenylpropan, Anilin, Ethanolamin oder Ethylendiamin hergestellt. Auch Sucrosepolyether, wie sie z.B. in den DE-ASen 1 176 358 und 1 064 938 beschrieben werden, kommen in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen. Auch durch Vinylpolymerisate modifizierte Polyether, wie sie z.B. durch Polymerisation von Styrol und Acrylnitril in Gegenwart von Polyethern entstehen (US-PSen 3 383 351, 3 304 273, 3 523 093, 3 110 695, deutsche Patentschrift 1 152 536), sind geeignet, ebenso OH-Gruppen aufweisende Polybutadiene.

Unter den Polythioethern seien insbesondere die Kondensationsprodukte an Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythiomischether, Polythioetherester oder Polythioetheresteramide.

Als Polyacetale kommen z.B. die aus Glykolen, wie Diethylenglykol, Triethylenglykol, 4,4'-Dioxethoxydiphenyldimethylmethan, Hexandiol und Formaldehyd herstellbaren Verbindungen in Frage. Auch durch Polymerisation cyclischer Acetale lassen sich erfindungsgemäß geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden und Polyamiden zählen z.B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate.

Auch bereits Urethan- oder Harnstoffgruppen enthaltene Polyhydroxylverbindungen sowie gegebenenfalls modifizierte natürliche Polyole, wie Rizinusöl, Kohlenhydrate oder Stärke, sind verwendbar. Auch Anlagerungsprodukte von Alkylenoxiden an Phenol-Formaldehyd-Harze oder auch an Harnstoff-Formaldehydharze sind erfindungsgemäß einsetzbar.

Vertreter dieser Verbindungen sind z.B. in High Polymers, Vol. XVI, "Polyurethans, Chemistry and Technology", verfaßt von Saunders-Frisch, Interscience Publishers, New York, London, Band I, 1962, Seiten 32 - 42 und Seiten 44 - 54 und Band II, 1964, Seiten 5 -6 und 198 - 199, sowie im Kunststoff-Handbuch, Band VII, Vieweg-Höchtlen, Carl-Hanser-Verlag, München, 1966, z.B. auf den Seiten 45 - 71, beschrieben.

Selbstverständlich können Mischungen der obengenannten Verbindungen mit mindestens zwei gegenüber Isocyanaten reaktionsfähigen Wasserstoffatomen mit einem Molekulargewicht von 400 - 10 000, z.B. Mischungen von Polyethern, eingesetzt werden.

Als gegebenenfalls einzusetzende Ausgangskomponenten kommen auch Verbindungen mit mindestens zwei gegenüber Isocyanaten reaktionsfähigen Wasserstoffatomen von einem Molekulargewicht 32 - 400 in Frage. Auch in diesem Fall versteht man hierunter Hydroxylgruppen und/oder Aminogruppen und/oder Thiolgruppen und/oder Carboxylgruppen aufweisende Verbindungen, vorzugsweise Verbindungen, die als Kettenverlängerungsmittel oder Vernetzungsmittel dienen. Diese Verbindungen weisen in der Regel 2 bis 8 gegenüber Isocyanaten reaktionsfähige Wasserstoffatome auf, vorzugsweise 2 oder 3 reaktionsfähige Wasserstoffatome.

Als Beispiele für derartige Verbindungen seien genannt:

Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Glyzerin, Trimethylolpropan, Hexantriol-(1,2,6), Trimethyloläthan, Pentaerythrit, Chinit, Mannit und Sorbit, Diethylenglykol, Triethylenglykol, Tetraethylenglykol, Polyethylenglykole mit einem Molekulargewicht bis 400, Dipropylenglykol, Polypropylenglykole mit einem Molekulargewicht bis 400, Dibutyllenglykol, Polybutylenglykole mit einem Molekulargewicht bis 400, 4,4'-Dihydroxydiphenylpropan, Di-hydroxymethyl-hydrochinon, Äthanolamin, Diäthanolamin, Triäthanolamin, 3-Aminopropanol, Ethylendiamin, 1,3-Diaminopropan, 1-Mercapto-3-aminopropan, 4-Hydroxy- oder -Amino-phthalsäure, Bernsteinsäure, Adipinsäure, Hydrazin, N,N'-Dimethylhydrazin, 4,4'-Diaminodiphenylmethan, Toluylendiamin, Methylen-bis-chloranilin, Methylen-bis-anthranilsäueester, Diaminobenzoesäureester und die isomeren Chlorphenylendiamine.

Auch in diesem Fall können Mischungen von verschiedenen Verbindungen mit mindestens zwei gegenüber Isocyanaten reaktionsfähigen Wasserstoffatomen mit einem Molekulargewicht von 32 - 400 verwendet werden.

Es können jedoch auch Polyhydroxylverbindungen eingesetzt werden, in welchen hochmolekulare Polyaddukte bzw. Polykondensate in feindisperser oder gelöster Form enthalten sind. Derartige modifizierte Polyhydroxylverbindungen werden erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) direkt in situ in den oben genannten, Hydroxylgruppen aufweisenden Verbindungen ablaufen läßt. Derartige Verfahren sind beispielsweise in den DE-ASen 1 168 075 und 1 260 142, sowie den DE-OSen 2 324 134, 2 423 984, 2 512 385, 2 513 815, 2 550 797, 2 550 833 und 2 550 862 beschrieben. Es ist aber auch möglich, gemäß US-PS 3 869 413 bzw. DE-OS 2 550 860 eine fertige wässrige Polymerdispersion mit einer Polyhydroxylverbindung zu vermischen und anschließend aus dem Gemisch das Wasser zu entfernen.

Bei der Auswahl der für die Herstellung des Polyurethans verwendeten höhermolekularen Polyolkomponente ist zu beachten, daß das fertige Polyurethan in Wasser nicht quellbar sein soll. Die Verwendung eines Überschusses an Polyhydroxylverbindungen mit Ethylenoxideinheiten (Polyethylenglykolpolyether oder Polyester mit Diethylen- oder Triethylenglykol als Diolkomponente) ist daher zu vermeiden.

Die erfindungsgemäßen Formkörper eignen sich bei günstiger Warmblütertoxizität zur Bekämpfung von Parasiten bzw. tierischen Schädlingen wie Arthropoden, vorzugsweise Insekten und Spinnentieren, die in der Tierhaltung und Tierzucht bei Haus- und Nutztieren sowie Zoo-, Labor-, Versuchs- und Hobbytieren vorkommen. Sie sind dabei gegen alle oder einzelne Entwicklungsstadien der Schädlinge sowie gegen resistente und normal sensible Arten der Schädlinge wirksam.

Zu den Schädlingen gehören:
Aus der Ordnung der Anoplura z.B. Haematopinus spp., Linognathus spp., Solenopotes spp., Pediculus spp., Pthirus spp.;
aus der Ordnung der Mallophaga z.B. Trimenopon spp., Menopon spp., Eomenacanthus spp., Menacanthus spp., Trichodectes spp., Felicola spp., Damalinea spp., Bovicola spp;
aus der Ordnung der Diptera z.B. Chrysops spp., Tabanus spp., Musca spp., Hydrotaea spp., Muscina spp., Haematobosca spp., Haematobia spp., Stomoxys spp., Fannia spp., Glossina spp., Lucilia spp., Calliphora spp., Auchmeromyia spp., Cordylobia spp., Cochliomyia spp., Chrysomyia spp., Sarcophaga spp., Wohlfartia spp., Gasterophilus spp., Oesteromyia spp., Oedemagena spp., Hypoderma spp., Oestrus spp., Rhinoestrus spp., Melophagus spp., Hippobosca spp..

Aus der Ordnung der Siphonaptera z.B. Ctenocephalides spp., Echidnophaga spp., Ceratophyllus spp..

Aus der Ordnung der Metastigmata z.B. Hyalomma spp., Rhipicephalus spp., Boophilus spp., Amblyomma spp., Haemophysalis spp., Dermacentor spp., Ixodes spp., Argas spp., Ornithodorus spp., Otobius spp.;
aus der Ordnung der Mesastigmata z.B. Dermanyssus spp., Ornithonyssus spp., Pneumonyssus spp..

Aus der Ordnung der Prostigmata z.B. Cheyletiella spp., Psorergates spp., Myobia spp., Demodex spp., Neotrombicula spp.;
aus der Ordnung der Astigmata z.B. Acarus spp., Myocoptes spp., Psoroptes spp., Chorioptes spp., Otodectes spp., Sarcoptes spp., Notoedres spp., Knemidocoptes spp., Neoknemidocoptes spp. Lytodites spp., Laminosioptes spp..

Besonders hervorgehoben seien Flöhe und Zecken.

Zu den Haus- und Nutztieren gehören Säugetiere wie z.B. Rinder, Schafe, Ziegen, Pferde, Schweine, Hunde, Katzen.

Bevorzugt eingesetzt werden die erfindungsgemäßen Formkörper in Form von Halsbändern und Halsbandanhängern (Medaillons) bei Hobbytieren wie Hunden und Katzen.

Formulierungsbeispiele:

A) Herstellung eines insektiziden Medaillons für Hunde

Zusammensetzung:

| | |
|---|---|
| 1. Propoxur | 15 % |
| 2. Flumethrin | 3 % |
| 3. Isopropylpalmitat | 8,0 % |
| 4. Triethylcitrat | 17,0 % |
| 5. PVC Homopolymer | 62,0 % |
| | 100,0 % |

Herstellung:
a) 1, 2, 3 und 4 unter Erwärmen lösen.
b) PVC vorlegen und mit Lösung a) hochtourig mischen.

c) Mischung b zu 16 cm$^2$ großen Medaillons spritzgießen. (Unter Medaillons werden Anhänger verstanden, die an ein übliches Halsband (ohne Insektizid) - z.B. aus Leder - angebracht werden, vergleichbar einer Hundemarke.)

B) Herstellung eines Medaillons

Zusammensetzung:

| | |
|---|---|
| 1. Propoxur | 10,0 % |
| 2. Flumethrin | 2,3 % |
| 3. Dioctylphthalat | 10,0 % |
| 4. Dibutyladipat | 12,0 % |
| 5. epoxidiertes Sojabohnenöl | 2,7 % |
| 6. Farbpigment | 0,2 % |
| 7. PVC Homopolymer | 62,8 % |
| | 100,0 % |

Herstellung:

a) 1 bis 5 werden zusammengewogen und unter Erwärmen gelöst.

b) 6 und 7 werden gemischt.

c) a) wird unter laufendem Mischer in b) eingerührt und so lange gemischt, bis ein fließfähiges Pulver entstanden ist.

d) Das Pulver c wird auf einem Extruder zu einem Band extrudiert, aus dem 16 cm$^2$ große Platten als Medaillons ausgestanzt werden.

C) Herstellung eines Hundehalsbandes

Zusammensetzung:

| | |
|---|---|
| 1. Flumethrin | 2,5 % |
| 2. Propoxur | 10,0 % |
| 3. Triacetin | 9,5 % |
| 4. epoxidiertes Sojaöl | 20,0 % |
| 5. Stearinsäure | 0,5 % |
| 6. PVC Homopolymer | 57,5 % |
| | 100,0 % |

Herstellung:

a) 1 und Zecken werden in 3 und 4 unter Erwärmen gelöst.

b) 6 und 5 werden gemischt.

c) Unter laufendem Mischer wird a) auf b) gegeben und gemischt, bis ein fließfähiges Granulat entstanden ist.

d) c) wird mit einem Extruder zu einem Band extrudiert, das in 50 cm Länge abgeschnitten wird. Das Band wird noch mit einer Schnalle versehen. Alternativ läßt sich aber Mischung c) auch auf einer Spritzgußmaschine zu Hundehalsbändern formen.

D) Herstellung eines Halsbandes auf Basis Polyurethan

Komponente I

| | |
|---|---|
| Flumethrin | 2,5 |
| Propoxur | 10,0 |
| Trihydroxypolyether (M6 4800) | 48,0 |
| Butandiol-1,4 | 5,0 |
| Farbpigment | 0,5 |
| Zeolith Paste (1:1 im Rizinusöl) | 0,5 |
| Isopropylmyristat | 8,0 |
| Dibutylzinndilaurat | 0,02 |

Komponente II

Tripropylenglykol-modifiziertes 4,4'-Diisocyanatodiphenyl-methan (Isocyanatgehalt 23 %)

Die Substanzen der Komponente I werden - bis auf den Katalysator (Dibutylzinndilaurat) - in einem beheizbaren Kessel zusammengemischt und auf ca. 60 °C erwärmt. Danach wird der Katalysator zugemischt.

Diese Komponente I wird mit der Komponente II intensiv vermischt und dann in eine Kastenform ausgegossen. Das Gemisch beginnt 30 sec nach dem Mischen zu reagieren und ist nach ca. 60 sec erhärtet. Nach Erkalten kann die entstandene Platte in Bänder zerschnitten werden.

(E) Beispiel für ein insektizides Medaillon für Hunde

Zusammensetzung:

| | |
|---|---|
| 1. Propoxur | 10,0 % |
| 2. Flumethrin | 2,5 % |
| 3. Triacetin | 5,0 % |
| 4. modifiziertes Polyamid | 82,5 % |
| | 100,0 % |

Herstellung:

a) 1, 2 und 3 werden unter Erwärmen verflüssigt.

b) Bei laufendem Mischer wird die Lösung a) zugegeben und weitergemischt bis ein homogenes Granulat entstanden ist.

c) Das Granulat aus b) wird in Form der Medaillons spritzgegossen. Es kann auch durch Ausstanzen aus Platten erhalten werden, die aus einem Extrusions-Prozeß stammen.

Beispiel A 1

Test an Katzenflöhen (Ctenocephalides felis) / Halsbandtest in vivo

Testobjekt:

1 bis 4 Tage alte männliche und weibliche Adulte von Ctenocephalides felis

Versuchstiere:

möglichst kurzhaarige Hunde (z.B. Beagles)

Testverfahren:

Kunststoffpetrischalen, Ø 9 cm, Höhe 1,5 cm mit je 30 bis 50 Flöhen (1 bis 4 Tage alte männliche und weibliche Adulte von Ctenocephalides felis) werden 3 bis 5 Tage nach Schlupf in Hundekäfige gestellt und dort geöffnet, damit die Flöhe den im Käfig auf einem Lochblech befindlichen Hund unmittelbar befallen können.

Wenn der Flohbesatz des Versuchshundes eindeutig nachgewiesen ist, werden die zu testenden Halsbänder den Hunden umgelegt. Zu bestimmten Zeiten erfolgt eine Untersuchung der halsbandtragenden Hunde mit lebenden Flöhen. Zu bestimmten Zeiten nach Versuchsbeginn werden weitere Infestationen mit C. felis vorgenommen und es wird entsprechend verfahren.

Testkriterien:

Als Kriterium für die Wirkung des Halsbandes gilt die Verminderung der Zahl lebender adulter Flöhe auf den Hunden im Vergleich zu unbehandelten Kontrolltieren.

Ergebnisse:

Die mit Halsbändern verschiedener Zusammensetzung erhaltenen Ergebnisse sind in den folgenden Tabellen 1, 2 und 3 enthalten.

Beispiel A 2

Test an Hundezecken (Rhipicephalus sanguineus) / Halsbandtest in vivo

Testobjekt:

4 bis 8 Wochen alte männliche und weibliche nüchterne Adulte von Rhipicephalus sanguineus

Versuchstiere:

möglichst kurzhaarige Hunde (z.B. Beagles)

Testverfahren:

1. Infektion: Die Hunde befinden sich in Käfigen, deren Böden vollständig und deren Wände an den unteren zwei Dritteln von einer dem Käfig angepaßten Plastikwanne ausgekleidet werden. Der Boden der Wanne ist mit Stroh ausgelegt. 10 bis 15 min vor der Infektion werden die Hunde mit Rompun® 2 %ig (1 bis 1,5 mg/kg i.m.) sediert. Die Zecken befinden sich in Glasröhrchen, die durch einen mit Gase umwickelten Zellstoffstopfen verschlossen sind. Nachdem die Ruhigstellung der Hunde eingetreten ist, wird der Zellstoffstopfen von den Zeckenröhrchen entfernt, jedoch so, daß die Gaze in der Öffnung des Röhrchens verbleibt. Mit einer Pinzette wird die Gaze nun in das Röhrchen eingebracht und dort so bewegt, daß sich möglichst alre Zecken in der Gaze verfangen. Die Zecken werden nun mit der Gaze in das Stroh auf dem Wannenboden gebracht, damit sie den sedierten Hund befallen können.

Nach 3 Tagen wird der Hund auf saugende Zecken untersucht (Praedikektionsstellen: Ohren, Augengegend, Innenseite der Schenkel, Achselhöhlen).

Ist der Zeckenbesatz des Versuchshundes nachgewiesen, werden den Hunden die zu testenden Halsbänder umgelegt. Nun kontrolliert man täglich einmal über 7 bis 10 Tage die Versuchstiere und stellt die Zahl der lebenden Zecken an den halsbandtragenden Tieren und an den Kontrolltieren fest.

Zu vorbestimmten Zeiten wird der halsbandtragende Hund erneut mit Zecken infiziert und wie oben verfahren.

Ergebnisse:

Die mit Halsbändern verschiedener Zusammensetzung erhaltenen Ergebnisse sind in den folgenden Tabellen 1, 2 und 3 enthalten.

## Tabelle 1

Ergebnisse mit Vergleichsband Propoxur

Rhipicephalus sanguineus, Ctenocephalides felis, ♀♀ ♂♂ Adulte / Hund

Hundehalsband (Propoxur 10 %, Handelsware): Zahl der Parasiten zu verschiedenen Zeiten nach Anlegen am Hund

| Halsband | Hund Nr. | Para-sit | Zahl der Zecken (Z) und Flöhe (F)/Hund | | | Wochen nach Anlegen der Halsbänder | | |
|---|---|---|---|---|---|---|---|---|
| | | | Woche +1 | +6 | +12 | +18 | +24 | +30 |
| Hunde- | 7 | Z | 0 | 0 | 16 | 18 | – | – |
| halsband | | F | 0 | 0 | ++ | ++ | – | ++ |
| Propoxur | 8 | Z | 0 | 0 | 7 | 14 | – | – |
| (10 % | | F | 0 | 0 | + | ++ | – | – |
| Handels- | 9 | Z | 0 | 0 | 0 | 16 | – | – |
| ware) | | F | 0 | 0 | + | ++ | – | – |
| unbehan- | 10 | Z | 16 | 22 | 11 | 21 | 17 | 8 |
| delte | | F | ++ | ++ | + | +++ | ++ | ++ |
| Kontrolle | 11 | Z | 12 | 27 | 13 | 24 | 15 | 25 |
| | | F | + | ++ | ++ | ++ | ++ | + |
| | 12 | Z | 10 | 22 | 9 | 12 | 20 | 24 |
| | | F | + | ++ | + | +++ | ++ | ++ |
| Infestationen Woche: | | | ±0 | +5 | +11 | +17 | +23 | +29 |
| | | | 1.In-fest. | 2.In-fest. | 3.In-fest. | 4.In-fest. | 5.In-fest. | 6.In-fest. |

mit Zecken (R. sanguineus) und Flöhen (C. felis) <u>nach</u> Anlegen der Halsbänder

Anlegen der Halsbänder

Zeichenerklärung:     0   = keine Flöhe
      +   = einzelne Flöhe (1-5)
    ++   = zahlreiche Flöhe (5-20)
   +++   = massenhaft Flöhe () 20)

EP 0 569 791 A2

**Tabelle 2**

Ergebnisse mit Vergleichsband Flumethrin

Rhipicephalus sanguineus, Ctenocephalides felis, ♀♀ ♂♂ Adulte / Hund

Hundehalsband (Flumethrin 2,25 %): Zahl der Parasiten zu verschiedenen Zeiten
nach Anlegen am Hund

| Halsband | Hund Nr. | Parasit | Zahl der Zecken (Z) und Flöhe (F)/Hund | | | Wochen nach Anlegen der Halsbänder | | |
|---|---|---|---|---|---|---|---|---|
| | | | Woche +1 | +6 | +12 | +18 | +24 | +30 |
| Hunde- | 13 | Z | 0 | 0 | 0 | 1 | 3 | 5 |
| halsband | | F | 0 | + | + + | + + + | + + | + + + |
| Flume- | 14 | Z | 0 | 0 | 1 | 2 | 7 | 8 |
| thrin | | F | + | + | + + + | + + | + + | + + |
| 2,25 % | 15 | Z | 0 | 0 | 0 | 0 | 2 | 2 |
| | | F | 0 | + + | + + | + + | + + + | + + |
| | 16 | Z | 0 | 0 | 0 | 2 | 4 | 2 |
| | | F | 0 | + | + + + | + + + | + + | + + |
| unbehan- | 17 | Z | 13 | 5 | 9 | 14 | 12 | 6 |
| delte | | F | + + | + + + | + + | + + | + + | + + |
| Kontrolle | 18 | Z | 5 | 9 | 6 | 10 | 13 | 5 |
| | | F | + + | + + | + + | + + + | + + | + + |
| Infestationen Woche: | | | ±0 | +5 | +11 | +17 | +23 | +29 |
| | | | 1.In- fest. | 2.In- fest. | 3.In- fest. | 4.In- fest. | 5.In- fest. | 6.In- fest. |

mit Zecken (R. sanguineus) und Flöhen (C. felis) nach Anlegen der
Halsbänder

Anlegen der Halsbänder

Zeichenerklärung:  0 = keine Flöhe
+ = einzelne Flöhe (1-5)
+ + = zahlreiche Flöhe (5-20)
+ + + = massenhaft Flöhe () 20)

## Tabelle 3

Ergebnisse mit erfindungsgemäßem Band

Rhipicephalus sanguineus, Ctenocephalides felis, ♀♀ ♂♂ Adulte / Hund

Hundehalsband (9,4 % Propoxur, 2,25 % Flumethrin): Zahl der Parasiten zu verschiedenen Zeiten vor/nach Anlegen am Hund

| Halsband | Hund Nr. | Para-sit | Zahl der Zecken (Z) und Flöhe (F)/Hund | | | | Wochen nach Anlegen der Halsbänder | | |
|---|---|---|---|---|---|---|---|---|---|
| | | | Woche -1 | +7 | +12 | +17 | +22 | +26 | +30 |
| Exp.7816R | 1 | Z | 18 | 0 | 0 | 0 | 0 | 0 | 1 |
| 9,4 % | | F | ++ | 0 | 0 | 0 | 0 | 0 | 0 |
| Propoxur | 2 | Z | 19 | 0 | 0 | 0 | 0 | 0 | 0 |
| + | | F | ++ | 0 | 0 | 0 | 0 | 0 | 0 |
| 2,25 % | 3 | Z | 14 | 0 | 0 | 0 | 0 | 0 | 0 |
| Flu- | | F | +++ | 0 | 0 | 0 | 0 | 0 | 0 |
| methrin | 4 | Z | 22 | 0 | 0 | 0 | 0 | 0 | 0 |
| | | F | +++ | 0 | 0 | 0 | 0 | 0 | 0 |
| | 5 | Z | 24 | 0 | 0 | 0 | 0 | 0 | 1 |
| | | F | +++ | 0 | 0 | 0 | 0 | 0 | 0 |
| | 6 | Z | 17 | 0 | 0 | 0 | 0 | 0 | 0 |
| | | F | ++ | 0 | 0 | 0 | 0 | 0 | + |

Zeichenerklärung:
- O = keine Flöhe
- + = einzelne Flöhe (1-5)
- ++ = zahlreiche Flöhe (5-20)
- +++ = massenhaft Flöhe () 20)

EP 0 569 791 A2

Tabelle 3 (Fortsetzung)

Ergebnisse mit erfindungsgemäßem Band

Rhipicephalus sanguineus, Ctenocephalides felis, ♀♀ ♂♂ Adulte / Hund

Hundehalsband (9,4 % Propoxur, 2,25 % Flumethrin): Zahl der Parasiten zu verschiedenen Zeiten vor/nach Anlegen am Hund

| Halsband | Hund Nr. | Parasit | Zahl der Zecken (Z) und Flöhe (F)/Hund Woche -1 | +7 | +12 | +17 | +22 | +26 | +30 |
|---|---|---|---|---|---|---|---|---|---|
| unbehandelte Kontrolle | 19 | Z | 11 | 4 | 5 | 11 | 2 | 4 | 6 |
|  |  | F | ++ | +++ | +++ | ++ | +++ | +++ | ++ |
|  | 20 | Z | 13 | 9 | 9 | 13 | 3 | 9 | 8 |
|  |  | F | + | ++ | ++ | ++ | + | +++ | +++ |
|  | 21 | Z | 18 | 4 | 11 | 14 | 2 | 5 | 7 |
|  |  | F | ++ | +++ | +++ | ++ | +++ | ++ | ++ |
|  | 22 | Z | 2 | 5 | 4 | 3 | 4 | 2 | 8 |
|  |  | F | ++ | +++ | ++ | 0 | ++ | ++ | ++ |

Wochen nach Anlegen der Halsbänder

Infestationen Woche: -2 +6 +11 +16 +21 +25 +29

Infestation vor Anlegen der Halsbänder

1.In- 2.In- 3.In- 4.In- 5.In- 6.In-
fest. fest. fest. fest. fest. fest. nach
mit Zecken (R. sanguineus) und Flöhen (C. felis)
Anlegen der Halsbänder

Anlegen der Halsbänder

Zeichenerklärung:
0 = keine Flöhe
+ = einzelne Flöhe (1-5)
++ = zahlreiche Flöhe (5-20)
+++ = massenhaft Flöhe (> 20)

**Patentansprüche**

1. Formkörper zur Bekämpfung von Ektoparasiten bei Tieren, die als Wirkstoffe Flumethrin und Propoxur enthalten.

2. Verwendung von Flumethin und Propoxur als Wirkstoffe in Formkörpern zur Bekämpfung von Ektoparasiten bei Tieren.

3. Verwendung von Flumethrin und Propoxur als Wirkstoff zur Herstellung von Formkörpern zur Bekämpfung von Ektoparasiten bei Tieren.